Europäisches Patentamt

European Patent Office

Office européen des brevets

(11) Publication number: **0 475 152 A2**

# EUROPEAN PATENT APPLICATION

(21) Application number: **91114096.0**

(22) Date of filing: **22.08.91**

(51) Int. Cl.5: **B23B 13/02, B23B 7/02**

(30) Priority: **04.09.90 JP 232580/90**

(43) Date of publication of application:
**18.03.92 Bulletin 92/12**

(84) Designated Contracting States:
**CH DE FR GB IT LI**

(71) Applicant: **TSUGAMI CORPORATION**
**No. 18-16, Shinbashi 1-chome**
**Minato-ku Tokyo(JP)**

(72) Inventor: **Ishida, Kenichi, c/o Tsugami**

Corporation
Nagaoka Works, 1-1, Higashi-Zao 1-chome
Nagaoka-shi, Niigata(JP)
Inventor: Wakatsuki, Hidetsugu, c/o Tsugami
Corporation
Nagaoka Works, 1-1, Higashi-Zao 1-chome
Nagaoka-shi, Niigata(JP)

(74) Representative: **Patentanwälte Grünecker,**
**Kinkeldey, Stockmair & Partner**
**Maximilianstrasse 58**
**W-8000 München 22(DE)**

(54) **Lathe.**

(57) A lathe of the type wherein work in the form of a rod to be machined is held on said lathe while said work is inserted through a main spindle includes a main spindle pedestal immovably arranged at a predetermined position on a main frame of the lathe, a hollow mains pindle rotatably supported on the main spindle pedestal, a guide bush mechanism for guiding slidable movement of the work, a hollow quill main spindle received in the main spindle so as not to rotate relative to the main spindle but move in the axial direction, a chuck mechanism disposed at the foremost end of the quill main spindle to firmly hold the work, a chuck opening/closing mechanism for opening or closing the chuck and a quill main spindle displacing unit for displacing the quill main spindle in the axial direction. The guide bush mechanism includes a guide bush of which cross-sectional shape coincides with that of the work to be machined. When a cutting operation is performed using a cutting tool fixedly mounted on a tool pedestal, the work is protruded forwardly of the guide bush by actuating the chuck opening/closing mechanism. When a drilling operation is performed using a drill or the like, an index pin is engaged with one of grooves on an index plate disposed at the rear end of the main spindle while rotation of a built-in motor is interrupted.

FIG. 1

EP 0 475 152 A2

# BACKGROUND OF THE INVENTION

(Field of the invention)

The present invention relates generally to a lathe. More particularly, the present invention relates to a lathe of the type wherein a work in the form of a rod to be machined is held on the lathe while it is inserted through a main spindle.

(Description of the related art)

A conventional lathe of the foregoing type has been hitherto constructed such that a main spindle through which a rod-shaped long material to be machined (herein after referred to simply as a rod) extends is displaced in the direction of an axis of the main spindle together with a main spindle pedestal in which the main spindle is rotatably supported and feeding of the rod is achieved by displacing the main spindle pedestal. In addition, the conventional lathe including the movable main spindle pedestal in the above-described manner is usually provided with a support pedestal at the cutting position located in front of the main spindle pedestal so that a guide bush is mounted on the support pedestal in the coaxial relationship relative to the main spindle and the rod held in the main spindle is firmly supported by the guide bush. It should be noted that the support pedestal is made integral with a bed on a main frame of the lathe but it is arranged separately from the main spindle pedestal. Such arrangement of the guide bush in the above-described manner makes it possible to prevent flexible deformation of the rod during a machining operation and moreover perform a precise cutting operation (for example, refer to official gazettes of Japanese Unexamined Patent Publication (Kokai) NO. 56-119304, Japanese examined Utility Model Publication (Kokoku) NO. 62-28321 and Japanese unexamined Patent Publication (kokai) NO. 61-125705). In general, the guide bush is classified into the following three types.

(a) Stationary type guide bush which is kept immovable regardless of rotation of the rod

(b) Rotary type guide bush which is rotated as the rod is rotated

(c) Forcibly rotatable type guide bush which is forcibly rotated by the main spindle

However, since the conventional lathe is constructed such that the whole main spindle pedestal having the main spindle held therein is displaced to feed the rod, a mechanism for displacing the heavy main spindle pedestal with high accuracy is unavoidably designed and constructed in larger dimensions, resulting in the lathe being fabricated at an expensive cost.

In addition, with respect to the guide bush for the conventional lathe, in a case of the stationary type guide bush as mentioned in the paragraph (a), the guide bush can not be used for a rod having a non-circular cross-sectional shape. Next, in a case of the rotary type guide bush as mentioned in the paragraph (b), there arises a problem that the guide bush can not automatically be used for a rod having a non-circular cross-sectional shape such as a rod having a hexagonal cross-sectional shape, because the positional phase of the guide bush can be aligned with that of the main spindle only by operator's manual handling. Further, in a case of the forcibly rotary type guide bush as mentioned din the paragraph (c), there arises another problem that a complicated mechanism is required for transmitting rotation of the axially displaceable main spindle to the guide bush disposed at a predetermined position.

# SUMMARY OF THE INVENTION

The present invention has been made with the foregoing background in mind.

An object of the present invention is to provide a lathe of the type wherein a work in the form of a rod to be machined is held on the lathe while it is inserted through a main spindle, wherein the rod can be fed in the protruded state without any necessity for displacing a main spindle pedestal.

Another object of the present invention is to provide a lathe of the type wherein a work in the form of a rod to be machined is held on the lathe while it is inserted through a main spindle, wherein a rod having a non-circular cross-sectional shape can be machined without any problem.

According to the present invention, there is provided a lathe of the type wherein a work in the form of a rod to be machined is held on the lathe while the work is inserted through a main spindle, wherein the lathe includes a main spindle pedestal immovably arranged at a predetermined position on a main frame of the lathe, a hollow main spindle rotatably supported on the main spindle pedestal, a guide bush mechanism for guiding slidable movement of the work to be machined, a hollow quill main spindle received in the main spindle so as not to rotate relative to the main spindle but move in the axial direction, a chuck mechanism disposed at the former most of the quill main spindle to firmly hold the work, a chuck opening/closing mechanism for opening or closing the chuck, and a quill main spindle displacing unit for displacing the quill main spindle in the axial direction.

The guide bush mechanism is composed of a guide bush having a guide surface of which cross-sectional shape coincides with that of the work, a collet sleeve fixedly mounted on the main spindle while axially displaceably holding the guide bush, and an adjustment ring rotatably held at the rear end of the collect sleeve while coming in threadable engagement with a male-threaded part of the guide bush.

In addition, the chuck mechanism is composed of a chuck of which cross-sectional shape coincides with that of the work, a collet sleeve axially displaceably arranged relative to the quill main spindle while axially displaceably holding the chuck, a collet nut threadably engaged with a male-threaded part of the quill main spindle, and a coil spring not only for biasing the chuck in the forward direction but also for biasing the collet sleeve in the rearward direction.

Additionally, the chuck opening/closing mechanism is composed of a support sleeve arranged outside of the quill main sleeve, a toggle member turnably held on the support sleeve to turn about a support point, a cam sleeve arranged to be axially movable relative to the support sleeve while having a cam surface formed on the inner surface of the cam sleeve to define the position assumed by the fore end of the toggle member, an outer sleeve arranged to be rotatable relative to the cam sleeve and axially move together with the cam sleeve, a working arm turnably arranged to turn about a support shaft to reciprocably displace the outer sleeve, and a chuck opening/closing cylinder for turnably actuating the work arm.

Further, the quill main spindle displacing unit is composed of a ball screw shaft rotatably supported on a main frame of the lathe, a nut fixedly held on the movable frame and a servomotor operatively connected to the ball screw shaft to rotationally drive the same.

When a current operation is performed using a cutting tool fixedly mounted on a tool pedestal, the work is protruded forwardly of the guide bush by actuating the chuck opening/closing mechanism in such a direction that the work is released from the firmly held state.

When a drilling operation is performed using a drill or the like, an index pin is engaged with one of grooves on the outer surface of an index plate disposed at the rear end of the main spindle while rotation of a built-in motor is interrupted.

Other objects, features and advantages of the present invention will become apparent form reading of the following description which has been made in conjunction with the accompanying drawings.

BRIEF DESCRIPTION OF THE DRAWINGS

The present invention is illustrated in the following drawings in which:

Fig. 1 is a fragmentary sectional view of a lathe in accordance with an embodiment of the present invention, particularly illustrating essential components constituting the lathe; and

Fig. 2 is a fragmentary sectional view of the lathe in Fig. 1, particularly illustrating some of the essential components on an enlarged scale.

DESCRIPTION OF THE PREFERRED EMBODIMENT

Now, the present invention will be described in detail herein after with reference to the accompanying drawings which illustrate a preferred embodiment of the present invention.

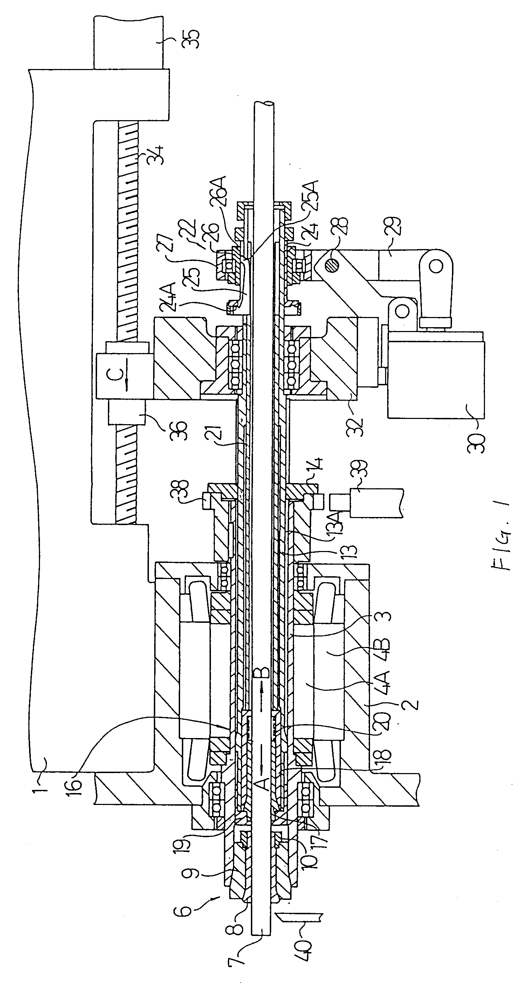

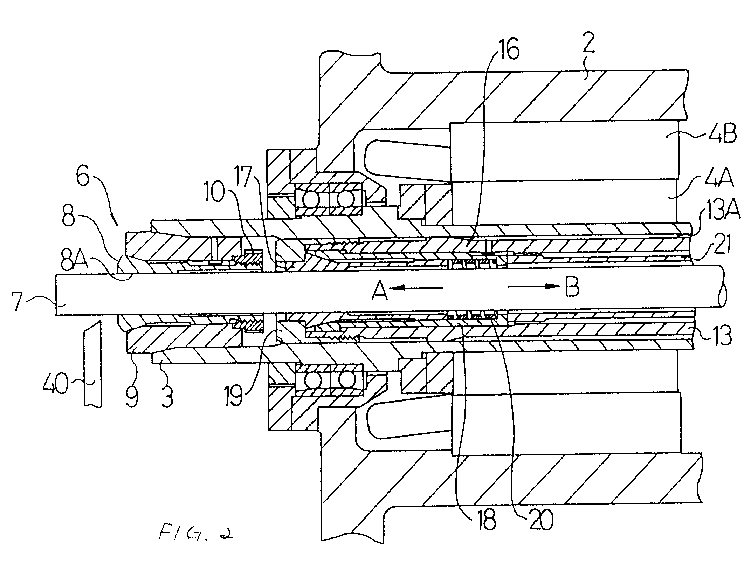

Fig. 1 is a fragmentary sectional view of a lathe in accordance with the embodiment of the present invention, and Fig. 2 is an enlarged sectional view of the lathe in Fig. 1, particularly illustrating essential components constituting the lathe. In these drawings, reference numeral 1 designates a main frame, reference numeral 2 designates a main spindle pedestal which is stationary mounted at a predetermined position on the main frame 1 and reference numeral 3 designates a hollow main spindle which is rotatably held to rotate at a predetermined position on the main spindle pedestal 2. A built-in motor comprising a rotor 4A fixedly mounted on the main spindle 3 and a stator 4B immovably arranged in the main spindle pedestal 2 is accommodated in the main pedestal 2. The built-in motor constitutes a main spindle rotating unit for rotationally driving the main spindle 3. It should be noted that a motor arranged outside of the main pedestal 2 so as to allow rotation of the motor to be transmitted to the main spindle 3 via pulleys, gears and so forth may be substituted for the built-in motor.

A guide bush mechanism 6 is attached to the foremost end of the main spindle 3. Specifically, the guide bush mechanism 6 is composed of a guide bush 8 having a guide surface 8A for guiding slidable movement of a rod 7 to be machined, a collet sleeve 9 fixedly mounted on the main spindle 3 while axially displaceably holding the guide bush 8, an adjustment ring 10 rotatably held at the rear end of the collet sleeve 9 while coming in threadable engagement with a male-threaded part of the guide bush 8 and an adjustment screw (not shown) including a gear meshing with another gear formed around the outer surface of the adjustment ring 10. The adjustment screw is arranged to extend through the collet sleeve 9. As the adjustment screw is manually rotated with an operator's hand, the adjustment sleeve 10 is rotated thereby displace the guide bush 8 relative to the collet sleeve 9 in the axial direction. Axially extending slits (not shown) are formed at the fore end part of the guide bush 8 which has resiliency effective in the direction of radial expansion of the guide bush 8. A tapered surface is formed on the outer surface of the guide bush 8 and a tapered surface is formed on the inner surface of the collet sleeve 9 in such a manner that the both tapered surfaces come in close contact with each other. With such formation of the both tapered surfaces as mentioned above, when the guide bush 8 is axially displaced relative to the collet sleeve 9 in the rightward direction by manually actuating the adjustment screw, the guide surface 8A of the guide bush 8 contracts in the radial direction so as to allow the rod 7 to be firmly held by the guide bush 8. On the contrary, when the guide bush 8 is axially displaced in the leftward direction, the guide surface 8A of the guide bush 8 expands in the radial direction so as to release the rod 7 from the firmly held state. In this manner, when the guide bush 8 is axially displaced relative to the collet sleeve 9 by manually actuating the adjustment screw, slidable movement of the rod 7 can be adjusted to a desired extent via the guide surface 8A of the guide bush 8. It should be added that the guide surface 8A of the guide bush 8 serves to guide slidable movement of the rod 7 and the configuration of the guide surface 8A is determined depending on the cross-sectional shape of the rod 7. For this reason, when there arises a necessity for varying the cross-sectional shape of the rod 7, it is naturally required that the cross-sectional shape of the guide bush 8 is varied correspondingly.

A hollow quill main spindle 13 is axially displaceably inserted through the main spindle 3 in the concentric relationship. Axially extending splines 13A are formed on the outer surface of the quill main spindle 13 such that they are engaged with spline grooves on the inner surface of a circular disc 14 disposed at the rear end of the main spindle 3 so as to allow the quill main spindle 13 to rotate together with the main spindle 9. With this construction, the quill main spindle 13 is axially slidably movable relative to the main spindle 3 and rotates together with the mains pindle 3 in the same direction. A chuck mechanism 16 is arranged at the fore end part of the quill main spindle 13 so as to firmly hold the rod 7. Specifically, the chuck mechanism 16 includes a chuck 17 for firmly holding the rod 7, a collet sleeve 18 axially displaceably arranged relative to the quill main spindle 13 while axially displaceably holding the chuck 17, a collet nut 19 threadably engaged with a male-threaded part of the quill main spindle 13 to prevent disconnection of the chuck 17 form the quill main spindle 13 and a coil spring 20 not only for biasing the chuck 17 in the A arrow-marked direction but also for biasing the collect sleeve 18 in the B arrow-marked direction. Axially extending slits (not sown) are formed at the fore end part of the chuck 17 which has resiliency effective for allowing the chuck 17 to expand in the radial direction. A tapered surface is formed on the outer surface of the chuck 17 and a tapered surface is formed on the inner surface of the collect sleeve 18 such that the both tapered surfaces comes in contact with each other. While the both tapered surface contact each other, the inner surface of the chuck 17 contracts in the radial direction thereby to firmly hold the rod 7 when the collect sleeve 18 is displaced relative to the chuck 17 in the A arrow-marked direction. On the contrary, when the collet sleeve 18 is displaced in the reverse direction, the inner surface of the chuck 17 expands in the radial direction due to its own resiliency, whereby the rod 7 is released from the firmly held state. Thus, the inner surface of the chuck 17 is configured so as to firmly hold the rod 7. For this reason, in a case where a rod having a non-circular cross-sectional shape is used as a work, the inner surface of the chuck 17 should be configured corresponding to the non-circular cross-sectional shape of the rod to be machined. In this case, the chuck 17 should be arranged such that the positional phase of the chuck 17 is aligned with that of the guide bush 8.

A hollow working sleeve 21 serving to actuate the collet sleeve 18 is axially displaceably received in the quill main spindle 13, and moreover a chuck opening/closing mechanism 22 for opening or closing the chuck 17 via the working sleeve 21 is disposed at the rear end of the quill main spindle 13. Specifically, the chuck opening/closing mechanism 22 comprises a support sleeve 24 arranged outside of the quill main spindle 13, a toggle member 25 turnably held on the support sleeve 24 to turn about a support point 24A, a cam sleeve 26 arranged to e axially movable relative to the support sleeve 24 while having a cam surface 26A formed on the inner surface of the cam sleeve 24 to define the position assumed by the fore end 25a of the toggle member 25, an outer sleeve 27 arranged to be rotatably relative to the cam sleeve 26 and axially move together with the cam sleeve 26, a working arm 29 turnably arranged to turn about a support shaft 28 to reciprocally displace the outer sleeve 27 and a chuck opening/closing cylinder 30 for turnably actuating the working arm 29. The support shaft 28, the working arm 29 and the chuck opening/closing cylinder 30 are mounted on a movable frame 32. With this construction, the chuck 17 can be opened or closed by actuating the chuck opening/closing cylinder 30 to displace the cam sleeve 26 via the working arm 29 and the outer sleeve 27 thereby to vary the position where the cam surface 26A of the cam sleeve 26 comes in contact with the toggle member 25.

As shown in Fig. 1, while the toggle member 25 contacts a part of the cam surface 26A having a smallest diameter, the toggle member 25 assumes the operative state wherein it permits the collet sleeve 18 to move in the A arrow-marked direction to an ultimate extent via the working sleeve 21, i.e., the chucked state wherein the chuck 17 contracts in the radial direction thereby to firmly hold the rod 7. Subsequently, when the cam sleeve 26 is displaced in the leftward direction from the position shown in Fig. 1 until the toggle member 25 is brought in contact with the slanted part of the cam surface 26A of the cam sleeve 26, the toggle member 25 permits the working sleeve 21 and the collet sleeve 9 to return in the opposite direction to the A arrow-marked direction (i.e., the B arrow-marked direction) by the resilient force of the coil spring 20, whereby the chuck 17 is opened to release the rod 7 from the firmly held state.

The movable frame 32 is operatively connected to the rear end of the quill main spindle 13 such that the quill main shaft 13 is kept rotatable and the movable frame 32 is axially movable together with the quill mains haft 13. The movable frame 32 is slidably held on a bed (not shown) made integral with the main frame 1. The main frame 1 is provided with a ball screw shaft 34 which extends in parallel with the quill mainshaft 13, and a Z-axis servomotor 35 operatively connected to the ball screw shaft 34. In addition, a nut 36 fixedly held on the movable frame 32 is threadably engaged with the ball screw shaft 34. With this construction, as the ball screw shaft 34 is rotated by the Z-axis servomotor 35, the movable frame 32 moves in the axial direction of the main spindle 3 (hereinafter referred to as a Z-axis direction), causing the quill main spindle 17 to move in the Z-axis direction together with the movable frame 32. In other words, the Z-axis servomotor 35, the ball screw shaft 34 and the nut 36 constitute a quill main spindle displacing unit which serves to displace the quill main spindle 13 in the axial direction.

An index plate 38 is mounted on the rear end of the main shaft 3, and a number of grooves each having a predetermined pitch are formed around the outer surface of the index plate 38. An index pin 39 is disposed at the position located in alignment with one of the grooves on the indexing plate 38. When the index pin 39 is engaged with the foregoing groove, the main spindle 3 is kept immovable. Thus, the main spindle 3 can not be rotated at all.

A tool pedestal (not shown) is arranged in front of the main spindle 3 so that a tool 40 for machining the rod 7 is fixedly mounted on the tool pedestal. In Fig. 2, a cutting tool 40 is shown as a tool. Alternatively, a rotational tool (not shown) such as a drill or the like may fixedly be mounted on the tool pedestal.

Next, machining operation of the lathe as constructed in the above-described manner will be described below.

First, a rod 7 to be machined is inserted through the quill main spindle 13, and the foremost end of the rod 7 to be machined is held by the guide bush 8 at the foremost end of the main spindle 3 so as to allow movement of the rod 7 to be guided by the guide bush 8. At this time, the guide bush 8 is adjusted such that slidable movement of the rod 7 is properly guided by the guide bush 8. On the other hand, the chuck opening/closing mechanism 22 is held in the closed state wherein the rod 7 is firmly chucked by the chuck 17.

While the foregoing state is maintained, a machining operation such as a cutting operation, a drilling operation or the like is performed with the lathe of the present invention. In a case where a cutting operation is performed, the main spindle 3 is rotationally driven by the built-in motor and rotation of the mains pindle 3 is then transmitted to the quill main spindle 13 so that the rod 7 which has been firmly chucked by the chuck 17 at the foremost end of the quill main spindle 13 is rotated by the quill mains spindle 13. Additionally, since rotation of the main spindle 3 is transmitted to the guide bush 8, the guide bush 8 is rotated together with the rod 7. Thus, there is no possibility that hot seizure takes place between the rod 7 and the guide bush 8.

On the other hand, the ball screw shaft 34 is rotated by the Z-axis servomotor 35 in such a direction that the nut 36 is displaced in the C arrow-marked direction, whereby the movable frame 32 operatively connected to the nut 36 and the quill main spindle 13 operatively connected to the movable frame 32 are displaced in the C arrow-marked direction, casing the rod 7 which has been firmly held by the chuck 17 at the foremost end of the quill main shaft 13 to be displaced in the A arrow-marked direction. Thus, the rod 7 is fed in the Z-axis direction so that it moves forwardly while forward movement of the rod 7 is properly guided by the guide bush 8 which has been held at a predetermined position. Now, a part of the rod 7 which has been protruded forwardly of the guide bush 8 is ready to be cut with the cutting tool 40 which has been fixedly mounted on the tool pedestal by a predetermined distance from the guide bush 8.

Next, in a case where a drilling operation is performed with the lathe of the present invention, while the foremost end part of the rod 7 to be machined is protruded to a predetermined position from the guide bush 8, rotation of the Z-axis servomotor 35 is interrupted and the main spindle 3 is then rotated to the predetermined indexed position where the indexing pin 39 is engaged with one of the grooves on the indexing plate 38. While the foregoing state is maintained, drilling operation is performed with a drill (not shown).

As will be apparent from the above description, the lathe of the present invention offers the following advantageous effects.

(1) Since feeding of a rod in the Z-axis direction is achieved by displacing the quill main spindle received in the main spindle, a weight derived from all movable components in the lathe of the present invention can substantially be reduced compared with the conventional lathe wherein the whole main spindle pedestal is displaceable. Consequently, the lathe can be designed and constructed in smaller dimensions at a reduced cost. In addition, a machining operation can be performed with high accuracy.

(2) Since the guide bush is rotated in synchronization with the rod to be machined, no hot seizure takes place even when a gap between the guide bush and the rod is set to be small. This assures that a machining operation can be performed with high accuracy.

(3) Since the guide bush and the chuck are rotated together with the main spindle at all times and thereby the positional phase of the guide bush is aligned with that of the chuck at all times, a machining operation can be performed for a rod having a non-circular cross-sectional shape by designing the guide bush and the chuck to have the same cross-sectional shape as that of the rod while they are arranged such that the positional phase of the guide bush is aligned with that of the chuck. In addition, the machining operation can automatically be performed for the rod having a non-circular cross-sectional shape.

(4) In contrast with the conventional lathe wherein a guide bush is arranged separately from a main spindle, since the guide bush is held directly by the main spindle, there is no necessity for arranging a mechanism for rotatably holding the guide bush or a mechanism for rotating the guide bush in operative association with the main spindle, resulting in the lathe being constructed very simply. In addition, since the guide bush and the chuck are held in a common main spindle, the axis of the guide bush can exactly be aligned with the axis of the chuck. This makes it possible to perform a machining operation with high accuracy.

While the present invention has been described above with respect to a single preferred embodiment thereof, it should of course be understood that the present invention should not be limited only to this embodiment but various changes or modifications may be made without departure from the scope of the invention as defined by the appended claims.

**Claims**

1. In a lathe of the type wherein work in the form of a rod to be machined is held on said lathe while said work is inserted through a main spindle, the improvement comprising;

   a main spindle pedestal immovably arranged at a predetermined position on a main frame of the lathe,

   a hollow main spindle rotatably supported on said main spindle pedestal,

   a guide bush mechanism for guiding slidable movement of said work to be machined,

   a hollow quill main spindle received in said main spindle so as not to rotate relative to said main spindle but move in the axial direction,

   a chuck mechanism disposed at the foremost end of said quill main spindle to firmly hold the work,

   a chuck opening/closing mechanism for opening or closing said chuck mechanism, and

   a quill main spindle displacing unit for displacing said quill main spindle in the axial direction.

2. The lathe as claimed in claim 1, wherein said guide bush mechanism comprises a guide bush having a guide surface of which cross-sectional shape coincides with that of the work to be machined, a collet sleeve fixedly mounted on the main spindle while axially displaceably holding said guide bush, and an adjustment ring rotatably held at the rear end of said collect sleeve while coming in threadable engagement with a male-threaded part of said guide bush.

3. The lathe as claimed in claim 2, wherein axially extending slits are formed at the fore end part of the guide bush so as to allow the guide bush to have resiliency effective in the radial direction so that when the guide bush is axially displaced in the rearward direction by said adjustment ring, the guide bush contracts in the radial direction so as to allow the work to be firmly held by the guide bush and when the guide bush is axially displaced in the forward direction by said adjustment ring, the guide bush expands in the radial direction so as to release the work from the firmly held state.

4. The lathe as claimed in claim 1, wherein axially extending splines are formed on the quill main spindle and spline grooves are formed on the circular disc disposed at the rear end of the main spindle so that the quill main spindle is rotated together with the main spindle.

5. The lathe as claimed in claim 1, wherein said chuck mechanism comprises a chuck of which cross-sectional shape coincides with that of the work, a collet sleeve axially displaceably arranged relative to the quill main spindle while axially displaceably holding said chuck, a collet nut threadably engaged with a male-threaded part of the quill main spindle, and a coil spring not only for biasing said chuck in the forward direction but also for biasing said collect sleeve in the rearward direction.

6. The lathe as claimed in claim 5, wherein axially extending slits are formed at the fore end part of said chuck so as to allow said chuck to have resiliency effective in the radial direction so that while said chuck and said collet sleeve come in contact with each other via their tapered surfaces, said chuck contracts in the radial direction to firmly hold the work when said collet sleeve is displaced in the forward direction by actuating said chuck opening/closing mechanism, and moreover while said collet sleeve is operatively disengaged from said chuck, said chuck expands in the radial direction to release the work from the firmly held state by actuating said chuck opening/closing mechanism in the reverse direction.

7. The lathe as claimed in claim 1, wherein said chuck opening/closing mechanism comprises a support sleeve arranged outside of the quill main spindle, a toggle member turnably held on said support sleeve to turn about a support point, a cam sleeve arranged to be axially movable relative to said support sleeve while having a cam surface formed on the inner surface of said cam sleeve to define the position assumed by the fore end of said toggle member, an outer sleeve arranged to be rotatable relative to said cam sleeve and axially move together with said cam sleeve, a working arm turnable arranged to turn about a support shaft to receprocably displace said outer sleeve, and a chuck opening/closing cylinder for turnably actuating said working arm.

8. The lathe as claimed in claim 7, wherein said support shaft, said working arm and said chuck opening/closing cylinder are mounted on a movable frame which serves to allow said quill mains pindle displacing unit to be operatively engaged with the quill main spindle.

9. The lathe as claimed in claim 1, wherein said quill main spindle displacing unit comprises a ball screw shaft ratably supported on the main frame of the lathe, a nut fixedly held on the movable frame and a servomotor operatively connected to said ball screw shaft to rotationally drive the same.

10. The lathe as claimed in claim 9, wherein when the mechanism is closed to firmly hold the work, said servomotor is driven in such a direction that the quill main spindle is axially displaced in the forward direction against the resilient of the coil spring via the chuck opening/closing mechanism and when the chuck is opened to release the work from the firmly held state, said servomotor is driven in the reverse direction.

11. The lathe as claimed in claim 1, further including an index plate which is mounted on the rear end of the main spindle so as to perform a drilling operation using a drill or the like.

12. The lathe as claim in claim 11, wherein an index pin is engaged with one of grooves formed around the outer surface of said index plate during a drilling operation while rotation of a motor for rotationally driving the main spindle is interrupted.

13. The lathe as claim in claim 1, further including a built-in motor received in said mains pindle pedestal, a rotor of said built-in motor being fixedly mounted on the main spindle.

Fig. 1

FIG. 2